# EUROPEAN PATENT SPECIFICATION

(11) **EP 0 517 273 B1**
(45) Date of publication and mention of the grant of the patent: **06.08.1997**
(21) Application number: 92109601.2
(22) Date of filing: 05.06.1992
(51) Int. Cl.: H04N 7/26

(54) **Method and device to regulate the output bit rate in variable bit rate video coders**
Verfahren und Einrichtung zur Regulierung der Ausgangsbitrate in Videokodern mit variabler Bitrate
Méthode et dispositif pour réguler le débit de sortie dans des codeurs vidéo à débit variable

(30) Priority: 07.06.1991 ES 9101387
(43) Date of publication of application: 09.12.1992
(73) Proprietor: ALCATEL ESPACIO S.A., E-28045 Madrid (ES)
(72) Inventor: Arias Gutierrez-Aceituno, Jaime, ES-28016 Madrid (ES); Carabantes Sanchez, Santiago, ES-28007 Madrid (ES); Lopez Varona, Antonio, ES-28933 Mostoles ( Madrid ) (ES); Ruiz Minguez, Jose Maria, ES-28020 Madrid (ES); Hamard, Loic, ES-28760 Tres Cantos ( Madrid ) (ES)
(74) Representative: Pohl, Herbert, Dipl.-Ing.

(56) References cited:
- EP-A- 0 309 280
- EP-A- 0 515 101
- GB-A- 2 242 097
- US-A- 3 571 505
- US-A- 4 698 672
- SIGNAL PROCESSING. IMAGE COMMUNICATION vol. 3, no. 4, September 1991, AMSTERDAM NL pages 333 - 343 N.OGINO ET AL. 'ATM video signal mutiplexer with congestion control function'
- ELECTRICAL COMMUNICATION vol. 64, no. 2/3, 1990, BRUSSELS BE pages 106 - 193 S.D'AGOSTINO ET AL. 'Universal ATM Video Coding Architecture'
- HDTV'90 COLLOQUIUM, OTTAWA, CANADA; 25 June 1990, pages 3B.5.1 - 3B.5.9 S.CUCCHI ET AL. 'Bit rate reduction codec for HDTV: Architecture and hardware implementation'
- IEEE JOURNAL ON SELECTED AREAS IN COMMUNICATION vol. 6, no. 9, December 1988, NEW YORK US pages 1623 - 1632 VERBIEST ET AL. 'The impact of the ATM concept on Video Coding'
- IEEE INT. CONF. ON COMMUNICATIONS 1989 BOSTONICC/89; vol. 3/3, 11 June 1989, pages 1343 - 1349 J.ZDEPSKI ET AL. 'Design of statistically based buffer control policies for compressed digital video'

## Description

### FIELD OF THE INVENTION

This invention, as stated in the title of this document, comprises a method and a device for regulating the data output rate for video compressors with variable output rate, whose data output rate is a function of the image quality required by the receiver, of the type of image being processed at each instant, and of certain statistical parameters of the output rate (mean and variance), and which include an output memory where the data continuously generated are stored.

The invention is particularly applicable in compressed video transmission, in which the availability of transmission system bandwidth varies with time, its object being to match the output rate of the video compressor to the occupancy conditions of the transmission system at each moment; achieving this by varying the statistical parameters that condition the output rate of the video compressor as a function of the level of the transmission system occupancy.

### Background to the invention

In the article "Universal ATM Video Coding" by S. D'Agostino et al. published in the Electrical Communication, vol. 64. no. 2/3 1990, pages 186-193 it is disclosed a scheme for variable bit rate coding wherein two separate controls functions -quality control and bandwidth control- are included to regulate the output bit rate.

These functions are developed by a encoder (which is also known as video compressor) that detects the irrelevant information from the video signal and removes it. In this way, the encoder provides an image quality that can be selected over a given range corresponding to an output bit rate behaviour. This output bit rate is characterised by a probability density function which is parametrised by its average and variance.

The bandwidth control ensures that the output bit rate of the video compressor fits within the bandwidth requirements sets by the network.

However, this kind of devices have the inconvenience that they cannot automatically adapt to the conditions of bandwidth availability, since it does receive any information on the state of occupancy of the transmission systems. In this way, if a certain image requires a large bandwidth in order to be transmitted with the quality required, and the transmission system has a relatively low activity, the video compressor does not use all the bandwidth that it could employ since the parameters preset by the video compressor do not permit it.

### TECHNICAL PROBLEM TO BE OVERCOME

Consequently the technical problem to be overcome consists on matching, in real time, the output rate of a variable output rate video compressor to the availability of bandwidth of the transmission system employed.

### SUMMARY OF THE INVENTION

To overcome the inconveniences mentioned above, the invention is defined in the appended claims 1 and 2, with further embodiments defined in dependent claims. Said invention comprises a method and a device for regulating the data output rate of variable output rate video compressors, the object being to match the output rate of the video compressor to the conditions of occupancy of the transmission system at each moment; doing this by varying the statistical parameters that condition the output rate of the video compressor as a function of the level of occupancy of the transmission system. The method is characterised in that it has a first phase in which the output memory of the video compressor is analized, obtaining the number of writing commands that are made each time that an information cell, generated by the video compressor, is stored in said output memory, this number depending on the relation between the length of the cell and the length of the information unit that can be stored in the output memory with a single writing command; obtaining besides, the number of reading commands made when extracting information from the video compressor output memory, for sending it to the transmission system, and calculating the variation in the filling of the compressor output memory as a function of the number of writing and reading commands generated and of the amount of information transferred with each one of these commands.

The method is also characterised in that it has a second phase that adds algebraically the value of the variation of the filling of the video compressor output memory and the absolute value of filling of the output memory stored in a register since the preceding operational cycle; calculating the new statistical parameters as a function of the parameters with which the video compressor was working up to that moment, of the absolute value of filling of the video compressor output memory in some preceding operational cycles, of the minimum image quality required at the receiving end, and of the current absolute value of filling of the output memory; and in that it has a third phase for sending the new parameters determined to the video compressor according to the corresponding communication protocol.

The device is characterised in that the first phase is carried out by means of a reading/writing command reading module and a filling variation calculator module.

The reading /writing command reading module is connected to the output memory and has two registers, one for storing the number of writing commands and the other for storing the number of reading commands made on the output memory.

The reading/writing command reading module is also connected to the filling variation calculator module, which computes the change in the filling of the output memory as a function of the values contained in said registers and the amount of information that is transferred with each reading and writing command.

The filling variation calculator module, in turn, is connected to the processor module and has a register in which the result of the calculation is stored. It also has outputs for resetting to zero the registers held in the reading/writing command reading module, once their content has been used.

The device is characterised in that the second phase of the method is done by means of a processor module and an algorithms module.

The processor module is also connected to the algorithms module and to the parameters transmitting module. It adds algebraically the value of the variation of filling of the video compressor output memory to the absolute value of filling of this output memory during the previous working cycle, this value being stored in a register located in the processor module.

The processor module also determines the new statistical parameters, taking into account: the statistical parameters with which the video compressor was working up to the moment, the absolute value of the filling of the output memory during some preceding working cycles, the minimum image quality required, and the absolute current value of filling of the output memory.

The algorithms module has a memory in which the decision algorithm, the current values of the statistical parameters, the value of the minimum quality required at the receiving end, and the absolute value of filling of the output memory in some preceding working cycles are stored.

Finally, the device is characterised in that the third phase is done by means of the parameter transmitting module, which is also connected to the video compressor, and which sends the new statistical parameters, determined in the processor module, to the video compressor according to the corresponding communication protocol.

In this way, by means of the method and device of the invention, a better use is made of the resources (bandwidth) of the transmission system, a more efficient transmission being achieved without degrading the quality of the compressed video signal that is being transmitted.

On the other hand, it is possible to connect a greater number of video compressors to the same transmission system, since the resources are shared among all of them and they have no fixed allocation. That is, the bandwidth that is not used by one video compressor at any moment can be used by any of the others connected to the transmission system.

The device of the invention which carries out the method, employs known, economical technologies, whereby its incorporation into existing video compressor systems implies only a minimal increase in cost if compared with the benefit obtained in the effective employment of transmission system resources.

Next, to facilitate a better understanding of this document, and forming an integral part thereof, a single figure is attached which, by way of illustration and in no limiting way, shows the object of the invention.

### BRIEF DESCRIPTION OF THE FIGURE

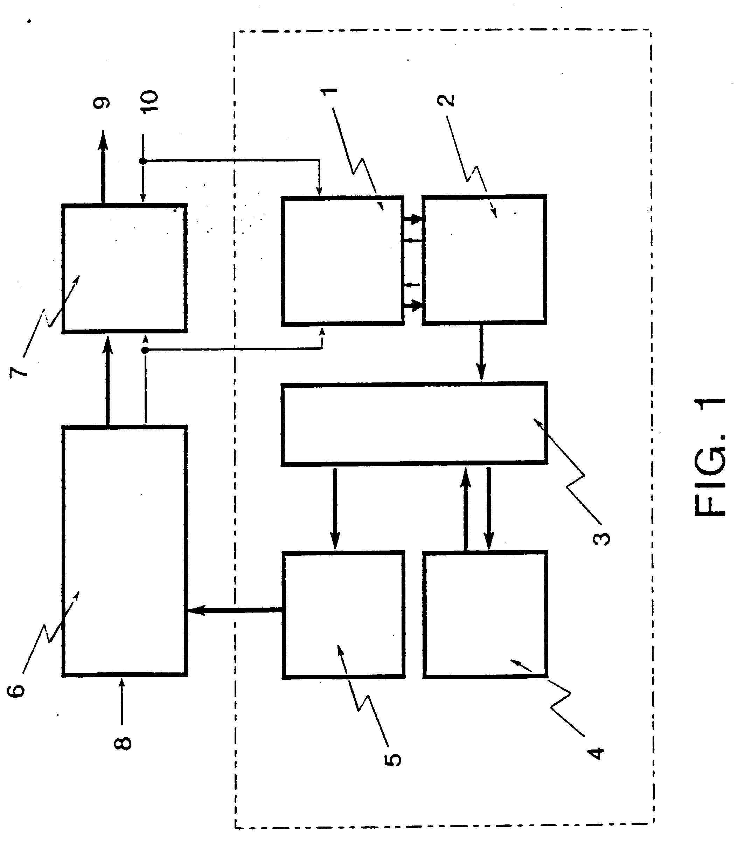

Figure 1 shows a block diagram representing a prefered implementation of the device for data output rate regulation for a video compressor with variable output rate, which functions in accordance with the method of the invention.

### DESCRIPTION OF THE INVENTION

A description of the invention based on the figure mentioned above is given below.

The invention comprises a method and a device for regulating the data output rate for video compressors with variable output rate, applicable to image transmission where the available bandwidth of the transmission system varies with time, as is the case with networks using Asynchronous Transfer Mode (ATM) operation, or with local area networks.

Regardless of the type of variable output bit rate video compressor being used, the actual mean output rate of data from the video compressor to the transmission system is variable with time. This variation in rate can be produced in two ways: either by regulating the instantaneous output bit rate, or by holding the output bit rate constant and inserting time intervals of variable duration in the course of which no data are generated (as is the case with ATM networks).

In the case of ATM cells generated by a video compressor with variable output rate, the ratio between the number of "ATM information cells" (cells containing useful information), and the number of "ATM empty cells" (cells containing no useful information), depends of the kind of image 8 that is being processed at each moment, on the quality of image required at the receiving end, and on the output rate statistical parameters (mean and variance) previously preset.

Therefore, the percentage of "ATM information cells" with respect to the total number of cells generated by the video compressor varies with time and has an upper value set by the statistical parameters already mentioned.

Consequently, conventional equipments cannot adapt automatically to the bandwidth availability conditions, since they do not receive any type of information regarding the true occupancy state of the transmission system. That is, if a certain image requires a large bandwidth to be transmitted with the required quality, and the transmission system has a low activity, the video compressor does not use all the bandwidth it could if the mean and variance parameters set previously for the compressor output rate do not permit it.

The invention overcomes these inconveniences by means of a method and a device that carries out the different phases of the method, and which can be connected to a video compressor with variable output bit rate of the type normally used.

It is to be noted that the commercially available video compressors with variable output bit rate 6, have an output memory 7 in which are stored the data that are being continuously generated by the video compressor. The data are sent to the transmission system when an indication is received that indicates they have permission for sending (for example, by the reception of a signal).

The method of the invention has a first phase for analysis of the contents of the output memory 7 of the video compressor, which is done by obtaining the number of writing commands that are made each time that an information cell, generated by the video compressor 6, is stored in this output memory 7, this number depending on the ratio existing between the length of the cell and the length of the information unit that can be stored in this output memory 7 with a single writing command.

In addition, in the first phase, the number of reading commands 10 that are made to extract information 9 from the video compressor output memory in order to send it to the transmission system is obtained, a calculation being made of the variation in the filling of the output memory 7 of the video compressor as a function of the number of writing and reading commands generated, and on the amount of information that is transferred with each of these reading or writing commands.

The method has a second phase where the algebraic sum is made of the value of the variation in filling of the output memory 7 of the video compressor and the absolute value of filling of the output memory 7 stored in a register from the preceding work cycle.

In this second phase, the new statistical parameters are also determined as a function of the parameters with which the video compressor 6 was working at that moment, of the absolute value of filling of the output memory 7 in some preceding work cycles, of the minimum image quality required by the receiving end, and of the present absolute value of filling of the output memory 7.

Finally the method has a third phase for transmitting the newly determined parameters to the video compressor 6, according to the corresponding communication protocol.

Next, a description of the device of the invention is given, by means of which the different phases of the method described above are put into practice.

The device has a reading/writing command reading module 1, which is connected to the output memory 7 of the video compressor 6.

In addition, the reading/writing command reading module 1 is connected to a filling variation calculator module 2 which, in turn, is connected to a processor module 3.

On the other hand, the processor module 3 is connected to an algorithms module 4 and to a parameter transmitting module 5, which, in turn, is connected to the video compressor 6.

A description is given below of the working of the device of the invention based on the method and structure described above.

So, the first phase of the method is carried out in the reading/writing command reading module 1 and in the filling variation calculator module 2.

The reading/writing command reading module 1 has two registers, in one of which is stored the number of writing commands that are made in the output memory 7 each time that an information cell generated by the video compressor is stored in the output memory 7 of the video compressor 6. The number of writing commands depends on the ratio between the length of the cell and the length of the information unit that can be stored in the output memory 7 in a single writing command. In the other register is stored the number of reading commands made on the output memory 7 each time that information 9 is extracted from it to be sent to the transmission system.

The filling variation calculator module 2 of the output memory 7 performs the function of calculating the filling of the output memory 7 during a working cycle, as a function of the values stored in the two registers of the reading/writing command reading module 1, and on the amount of information transferred with each reading or writing command on the output memory 7.

The filling variation calculator module 2 has a register in which the result of the calculation mentioned is stored.

In addition, the filling variation calculator module 2 has outputs for resetting to zero the registers of the reading/writing command reading module 1, once the contents have been used.

The second phase is done by means of a processor module 3 which includes a storage register with the absolute value of filling of the output memory 7 corresponding to the preceding working cycle, and which is updated with the information contained in the register of the filling variation calculator module 2.

The processor module 3 also determines the new statistical parameters as a function of the statistical parameters with which the video compressor was working up to that moment, of the absolute filling value of the output memory 7 in some preceding working cycles, of the minimum image quality required at the receiving end, and of the present absolute value of filling of the output memory.

The algorithms module 4 has a memory in which the decision algorithm (or comparison table), the current values of the statistical parameters, the minimum quality value required at the receiving end, and the absolute filling value of the output memory in some preceding working cycles are stored.

The new values calculated by the processor module 3 are sent to the video compressor 6 by the parameter transmitting module 5, which carries out the third phase of the method, in accordance with the corresponding communication protocol.

Consequently, by means of the method and the device of the invention, it is possible to change, in real time, the statistical parameters that condition the data output rate of the video compressor 6, as a function of the level of the transmission system occupancy.

## Claims

1. Method for regulating the output bit rate in a Variable Bit Rate video coder,
said video coder involving a video compressor (6) with variable output bit rate and an output memory (7) in which the data that are continuously generated by said video compressor (6) are stored, and
said variable output bit rate being a function of the image quality required by the receiver, of the type of image (8) being processed at each moment, and of adjustable statistical parameters of the video compressor output rate;
said method being applied in compressed video transmission where the bandwidth availability of the transmission system varies with time, and being directed to match the output rate of the video compressor (6) to the occupancy conditions of the transmission system at each moment by varying said adjustable statistical parameters, whereby said adjustable statistical parameters condition the output rate of the video compressor as a function of the level of the transmission system occupancy;
and further comprising
a first phase in which the content of output memory (7) of the video compressor is analysed by obtaining the number of writing commands that are made each time an information cell generated by the video compressor (6) is stored in said output memory (7), said number of writing commands depending on the relation between the length of said information cell and the length of the information unit that can be stored in the output memory (7) with a single writing command; by obtaining the number of reading commands (10) made when extracting information (9) from the output memory (7) for sending this information to the transmission system; and by calculating the variation in the filling of the video compressor output memory (7) during a working cycle as a function of the number of commands generated and of the amount of information transferred with each one of said writing and reading commands;
a second phase of adding algebraically the value of said variation in the filling of the video compressor output memory (7) during a working cycle and the absolute value of filling of the output memory (7) stored in a register since the preceding working cycle; and of calculating the new statistical parameters as a function of the parameters with which the video compressor was working up to that moment, of the absolute value of filling of the video compressor output memory (7) in some preceding working cycles, of the minimum image quality required at the receiving end, and of the current absolute value of filling of the output memory (7); and
a third phase for transmitting the new parameters to the video compressor (6) according to the corresponding communication protocol.

2. Device for regulating the output bit rate in a Variable Bit Rate video coder,
said video coder involving a video compressor (6) with variable output bit rate and an output memory (7) in which the data that are continuously generated by said video compressor (6) are stored, and said variable output bit rate being a function of the image quality required by the receiver, of the type of image (8) being processed at each moment, and of adjustable statistical parameters of the video compressor output rate;
said device being applied in compressed video transmission where the bandwidth availability of the transmission system varies with time, and being directed to match the output rate of the video compressor (6) to the occupancy conditions of the transmission system at each moment by varying said ajustable statistical parameters, whereby said adjustable statistical parameters condition the output rate of the video compressor as a function of the level of the transmission system occupancy;
and further comprising:
means (1,2) for analysing the content of the output memory (7) of the video compressor comprising a reading/writing command reading module (1) and a filling variation calculator module (2);
means (3,4) for calculating the new statistical parameters comprising a processor module (3) and an algorithms module (4);
means (5) for transmitting the new statistical parameters to the video compressor (6) comprising a parameter transmitting module (5);
whereby the reading/writing command reading module (1) is connected to the output memory (7) and has two registers, one for storing the number of writing commands and the other for storing the number of reading commands (10) made on the output memory (7), said writing commands being made each time an information cell generated by the video compressor (6) is stored in said output memory (7), said number of writing commands depending on the relation between the length of said information cell and the length of the information unit that can be stored in the output memory (7) with a single writing command said reading commands (10) being made when extracting information (9) from the output memory (7) for sending this information to the transmission system;
whereby the reading/writing command reading module (1) is also connected to the filling variation calculator module (2), which computes the change in the filling of the output memory (7) as a function of the values contained in said registers and the amount of information that is transferred with each reading or writing command;
whereby the filling variation calculator module (2) is connected to the processor module (3), has a register in which is stored the result of the calculation, and has outputs for resetting to zero the registers held in the reading/writing command reading module (1), once their content has been used.

3. Device according to claim 2, further characterised:
in that the processor module (3) is also connected to the algorithms module (4) and to the parameters transmitting module (5), adding algebraically the value of the variation in the filling of the output memory (7) to the absolute value of filling of this output memory (7) during the previous working cycle, this value being stored in a register located in the processor module (3);
in that the processor module (3) also calculates the new statistical parameters, taking into account the statistical parameters with which the video compressor was working up to the moment, the absolute value of filling of the output memory (7) during some preceding working cycles, the minimum image quality required, and the current absolute value of filling of the output memory (7); and
in that the algorithms module (4) has a memory in which the decision algorithm, the current values of the statistical parameters, the value of the minimum quality required at the receiving end, and the absolute value of filling of the output memory (7) in some preceding working cycles are stored.

4. Device according to claim 2, further characterised:
in that the parameter transmitting module (5) is also connected to the video compressor (6), and sends the new statistical parameters to the video compressor (6) according to the corresponding communication protocol.

## Patentansprüche

1. Verfahren zum Regeln der Ausgabe-Bitfolgefrequenz von Videocodierern mit veränderlicher Bitfolgefrequenz,
wobei der Videocodierer eine Videokomprimierungseinrichtung (6) mit veränderlicher Ausgabe-Bitfolgefrequenz und einen Ausgabespeicher (7) enthält, in welchem die durch die Videokomprimierungseinrichtung (6) kontinuierlich erzeugten Daten gespeichert werden, und
wobei die veränderliche Ausgabe-Bitfolgefrequenz eine Funktion der vom Empfänger geforderten Bildqualität, des Typs des in jedem Augenblick verarbeiteten Bildes (8) und nachstellbarer statistischer Parameter der Ausgabegeschwindigkeit der Videokomprimierungseinrichtung ist;
wobei das Verfahren bei der komprimierten Videodatenübertragung angewandt wird, bei welcher sich die Verfügbarkeit der Übertragungssystem-Bandbreite zeitlich ändert, und darauf gerichtet ist, die Ausgabegeschwindigkeit der Videokomprimierungseinrichtung (6) durch Veränderung der nachstellbaren statistischen Parameter zu jedem Zeitpunkt an die Belegungsbedingungen des Übertragungssystems anzupassen, wobei die nachstellbaren statistischen Parameter die Ausgabegeschwindigkeit der Videokomprimierungseinrichtung in Abhängigkeit vom Belegungszustand des Übertragungssystems bestimmen; und wobei das Verfahren desweiteren umfaßt:
eine erste Phase, in welcher der Inhalt des Ausgabespeichers (7) der Videokomprimierungseinrichtung analysiert wird, indem die Anzahl Schreibkommandos ermittelt wird, die jedesmal ausgeführt werden, wenn eine Informationszelle, die von der Videokomprimierungseinrichtung (6) erzeugt wurde, in dem Ausgabespeicher (7) gespeichert wird, wobei diese Anzahl Schreibkommandos von der Beziehung zwischen der Länge der Informationszelle und der Länge der Informationseinheit, die mit einem einzelnen Schreibkommando im Ausgabespeicher (7) gespeichert werden kann, abhängig ist; indem die Anzahl der Lesekommandos (10) ermittelt wird, die ausgeführt werden, wenn Informationen (9) aus dem Ausgabespeicher (7) der Videokomprimierungseinrichtung ausgelesen werden, um sie an das Übertragungssystem zu senden; und indem die Veränderung der Füllung des Ausgabespeichers (7) der Videokomprimierungseinrichtung während eines Betriebszyklusses als Funktion der Anzahl der erzeugten Kommandos und der mit jedem dieser Schreib- und Lesekommandos übertragenen Informationsmenge berechnet wird;
eine zweite Phase, in der der Wert der Veränderung der Füllung des Ausgabespeichers (7) der Videokomprimierungseinrichtung während eines Betriebszyklusses und der Absolutwert der Füllung des Ausgabespeichers (7), der seit dem vorhergehenden Betriebszyklus in einem Register gespeichert worden ist, algebraisch addiert werden und in der die neuen statistischen Parameter als Funktion der Parameter, mit denen die Videokomprimierungseinrichtung bis zum aktuellen Zeitpunkt gearbeitet hat, der Absolutwerte der Füllung des Ausgabespeichers (7) der Videokomprimierungseinrichtung in einigen vorhergehenden Betriebszyklen, der vom Empfänger mindestens geforderten Bildqualität und des aktuellen Absolutwertes der Füllung des Ausgabespeichers (7) berechnet werden, und
eine dritte Phase zum Senden der neuen Parameter an die Videokomprimierungseinrichtung (6) gemäß dem entsprechenden Übertragungsprotokoll.

2. Vorrichtung zum Regeln der Ausgabe-Bitfolgefrequenz von Videocodierern mit veränderlicher Bitfolgefrequenz,
wobei der Videocodierer eine Videokomprimierungseinrichtung (6) mit veränderlicher Ausgabe-Bitfolgefrequenz und einen Ausgabespeicher (7) enthält, in welchem die durch die Videokomprimierungseinrichtung (6) kontinuierlich erzeugten Daten gespeichert werden, und wobei die veränderliche Ausgabe-Bitfolgefrequenz eine Funktion der vom Empfänger geforderten Bildqualität, des Typs des in jedem Augenblick verarbeiteten Bildes (8) und nachstellbarer statistischer Parameter der Ausgabegeschwindigkeit der Videokomprimierungseinrichtung ist;
wobei die Vorrichtung bei der komprimierten Videodatenübertragung angewandt wird, bei welcher sich die Verfügbarkeit der Übertragungssystem-Bandbreite zeitlich ändert, und darauf gerichtet ist, die Ausgabegeschwindigkeit der Videokomprimierungseinrichtung (6) durch Veränderung der nachstellbaren statistischen Parameter zu jedem Zeitpunkt an die Belegungsbedingungen des Übertragungssystems anzupassen, wobei die nachstellbaren statistischen Parameter die Ausgabegeschwindigkeit der Videokomprimierungseinrichtung in Abhängigkeit vom Belegungszustand des Übertragungssystems bestimmen; und wobei die Vorrichtung desweiteren umfaßt:
Mittel (1, 2) zum Analysieren des Inhalts des Ausgabespeichers (7) der Videokomprimierungseinrichtung, ein Lesemodul (1) für Schreib-/Lesekommandos und ein Berechnungsmodul (2) für die Füllungsänderung umfassend;
Mittel (3, 4) zum Berechnen der neuen statistischen Parameter, ein Prozessormodul (3) und ein Algorithmenmodul (4) umfassend;
ein Mittel (5) zum übertragen der neuen statistischen Parameter an die Videokomprimierungseinrichtung (6), ein Parametersendemodul (5) umfassend;
wobei das Lesemodul (1) für Schreib-/Lesekommandos mit dem Ausgabespeicher (7) verbunden ist und zwei Register besitzt, eins zum Speichern der Anzahl der Schreibkommandos und das andere zum Speichern der Anzahl der Lesekommandos (10), die im Ausgabespeicher (7) durchgeführt wurden, wobei Schreibkommandos immer dann ausgeführt werden, wenn eine von der Videokomprimierungseinrichtung (6) erzeugte Informationszelle im Ausgabespeicher (7) gespeichert wird, wobei die Anzahl Schreibkommandos von der Beziehung zwischen der Länge der Informationszelle und der Länge der Informationseinheit, die mit einem einzelnen Schreibkommando im Ausgabespeicher (7) gespeichert werden kann, abhängig ist, und wobei die Lesekommandos (10) immer dann ausgeführt werden, wenn Informationen (9) aus dem Ausgabespeicher (7) ausgelesen werden, um diese Informationen an das Übertragungssystem zu senden;
wobei das Lesemodul (1) für Schreib-/Lesekommandos ebenfalls mit dem Berechnungsmodul (2) für die Füllungsänderung verbunden ist, welches die Veränderung der Füllung des Ausgabespeichers (7) als Funktion der in den Registern enthaltenen Werte und der mit jedem Schreib- und Lesekommando übertragenen Informationsmenge berechnet; und
wobei das Berechnungsmodul (2) für die Füllungsänderung mit dem Prozessormodul (3) verbunden ist, ein Register besitzt, in welchem das Ergebnis der Berechnung gespeichert wird, und Ausgänge besitzt, um die im Lesemodul (1) für Schreib-/Lesekommandos enthaltenen Register auf null zurückzusetzen, wenn deren Inhalt benutzt worden ist.

3. Vorrichtung gemäß Anspruch 2, desweiteren dadurch gekennzeichnet, daß
das Prozessormodul (3), welches den Wert der Veränderung der Füllung des Ausgabespeichers (7) zum Absolutwert der Füllung dieses Ausgabespeichers (7) während des vorhergehenden Betriebszyklus algebraisch addiert, wobei dieser Wert in einem Register gespeichert wird, das sich in dem Prozessormodul (3) befindet, ebenfalls mit dem Algorithmenmodul (4) und mit dem Parameterübertragungsmodul (5) verbunden ist;
das Prozessormodul (3) ebenfalls die neuen statistischen Parameter berechnet, wobei die statistischen Parameter, mit denen die Videokomprimierungseinrichtung bis zu diesem Zeitpunkt gearbeitet hat, der Absolutwert der Füllung des Ausgabespeichers (7) während einiger vorhergehender Betriebszyklen, die minimal erforderliche Bildqualität und der aktuelle Absolutwert der Füllung des Ausgabespeichers (7) berücksichtigt werden; und
daß das Algorithmenmodul (4) einen Speicher besitzt, in welchem der Entscheidungsalgorithmus, die aktuellen Werte der statistischen Parameter, der Wert der am Empfänger geforderten Mindestqualität und der Absolutwert der Füllung des Ausgabespeichers (7) in einigen vorhergehenden Betriebszyklen gespeichert werden.

4. Vorrichtung gemäß Anspruch 2, desweiteren dadurch gekennzeichnet, daß
das Parametersendemodul (5) ebenfalls mit der Videokomprimierungseinrichtung (6) verbunden ist und die neuen statistischen Parameter gemäß dem entsprechenden Übertragungsprotokoll an die Videokomprimierungseinrichtung (6) sendet.

## Revendications

1. Méthode de réglage du débit des bits de sortie dans un codeur vidéo a débit de bits variable, ledit codeur vidéo comprenant un compresseur vidéo (6) a débit de bits de sortie variable et une mémoire de sortie (7) dans laquelle les données qui sont générées en continu par ledit compresseur vidéo (6) sont stockées, et ledit débit de bits de sortie variable dépendant de la qualité de l'image exigée par le récepteur, du type de l'image (8) traitée a tout instant, et des paramètres statistiques réglables du débit de sortie du compresseur vidéo;
ladite méthode étant appliquée aux transmissions vidéo compressées dans lesquelles la disponibilité de la largeur de bande du système de transmission varie au cours du temps, et réglée de manière a ce que le débit de sortie du compresseur vidéo (6) corresponde aux conditions d'occupation du système de transmission a tout instant en changeant lesdits paramètres statistiques réglables; de cette manière lesdits paramètres statistiques réglables conditionnent le débit de sortie du compresseur vidéo en fonction du niveau d'occupation du système de transmission;
et comprenant également
une première phase dans laquelle le contenu de la mémoire de sortie (7) du compresseur vidéo est analysé en obtenant le nombre de commandes d'écriture qui sont faites chaque fois qu'une cellule d'information générée par le compresseur vidéo. (6) est stockée dans ladite mémoire de sortie (7), ledit nombre de commandes d'écriture dépendant du rapport entre la longueur de ladite cellule d'information et la longueur de l'unité d'information qui peuvent être stockées dans la mémoire de sortie (7) a l'aide d'une seule commande d'écriture; en obtenant le nombre de commandes de lecture (10) effectuées lors de l'extraction de l'information (9) de la mémoire de sortie (7) pour envoyer cette information au système de transmission; et en calculant la variation du remplissage de la mémoire de sortie du compresseur vidéo (7) pendant un cycle de fonctionnement en fonction du nombre de commandes générées et de la quantité d'informations transférées lors de chaque commande d'écriture ou de lecture;
une deuxième phase de sommation algébrique de la valeur de ladite variation du remplissage de la mémoire de sortie (7) du compresseur vidéo pendant un cycle de fonctionnement et de la valeur absolue du remplissage de la mémoire de sortie (7) stockée dans un registre depuis le cycle de fonctionnement précédent; et de calcul des nouveaux paramètres statistiques en fonction des paramètres selon lesquels le compresseur vidéo fonctionnait jusqu'à cet instant, de la valeur absolue du remplissage de la mémoire de sortie (7) du compresseur vidéo durant quelques cycles précédents de fonctionnement, de la qualité minimale de l'image exigée a la réception, et de la valeur absolue actuelle du remplissage de la mémoire de sortie (7); et
une troisième phase de transmission des nouveaux paramètres au compresseur vidéo (6) selon le protocole de communication approprié.

2. Dispositif de réglage du débit des bits de sortie dans un codeur vidéo a débit de bits variable,
ledit codeur vidéo comprenant un compresseur vidéo (6) a débit variable de bits de sortie et une mémoire de sortie (7) dans laquelle les données générées en continu par ledit compresseur vidéo (6) sont stockées, et ledit débit de bits de sortie variable dépendant de la qualité d'image exigée par le récepteur, du type de l'image (8) traitée a tout instant, et des paramètres statistiques réglables du débit de sortie du compresseur vidéo;
ledit dispositif étant appliqué aux transmissions vidéo compressées dans lesquelles la disponibilité de largeur de bande du système de transmission varie au cours du temps, et réglée de manière a ce que le débit de sortie du compresseur vidéo (6) corresponde aux conditions d'occupation du système de transmission a tout instant en changeant lesdits paramètres statistiques réglables; où lesdits paramètres statistiques réglables conditionnent le débit de sortie du compresseur vidéo en fonction du niveau d'occupation du système de transmission;
et comprenant également:
des moyens (1, 2) d'analyse du contenu de la mémoire de sortie (7) du compresseur vidéo, comprenant un module de lecture des commandes de lecture/écriture (1) et un module de calcul des variations de remplissage (2);
des moyens (3, 4) pour calculer les nouveaux paramètres statistiques, comprenant un processeur (3) et un module d'algorithmes (4);
des moyens (5) pour transmettre les nouveaux paramètres statistiques au compresseur vidéo (6), comprenant un module de transmission des paramètres (5);
grâce auxquels le module de lecture des commandes de lecture/écriture (1) est connecté a la mémoire de sortie (7) et possède deux registres, un pour le stockage du nombre de commandes d'écriture et un autre pour le nombre de commandes de lecture (10) effectuées sur la mémoire de sortie (7), lesdites commandes d'écriture étant effectuées chaque fois qu'une cellule d'information générée par le compresseur vidéo (6) est stockée dans ladite mémoire de sortie (7), ledit nombre de commandes d'écriture dépend du rapport entre la longueur de ladite cellule d'information et la longueur de l'unité d'information qui peuvent être stockées dans la mémoire de sortie (7) à l'aide d'une seule commande d'écriture, lesdites commandes de lecture (10) étant effectuées lors de l'extraction d'une information (9) de la mémoire de sortie (7) pour être envoyée au système de transmission;
grâce auxquels le module de lecture des commandes de lecture/écriture (1) est aussi connecté au module de calcul des variations de remplissage (2), qui calcule la variation du remplissage de la mémoire de sortie (7) en fonction des valeurs contenues dans lesdits registres et de la quantité d'informations transférées lors de chaque commande de lecture ou d'écriture;
grâce auxquels le module de calcul des variations de remplissage (2) est connecté au module processeur (3), et possède un registre dans lequel est stocké le résultat de l'opération, et possède des sorties pour la réinitialisation des registres contenus dans le module de lecture des commandes de lecture/écriture (1), une fois leur contenu utilisé.

3. Dispositif selon la revendication 2, caractérisé
en ce que le module processeur (3) est également connecté au module d'algorithmes (4) et au module de transmission des paramètres (5), additionnant algébriquement la valeur de la variation du remplissage de la mémoire de sortie (7) a la valeur absolue du remplissage de cette mémoire de sortie (7) du cycle de fonctionnement précédent, cette valeur étant stockée dans un registre du module processeur (3);
en ce que le module processeur (3) calcule également les nouveaux paramètres statistiques, prenant en compte les paramètres statistiques avec lesquels le compresseur vidéo fonctionnait jusqu'à lors, la valeur absolue du remplissage de la mémoire de sortie (7) durant quelques cycles de fonctionnement précédents, la qualité d'image minimale exigée, et la valeur absolue actuelle du remplissage de la mémoire de sortie (7); et
en ce que le module d'algorithmes (4) possède une mémoire dans laquelle sont stockés l'algorithme de décisions, les valeurs actuelles des paramètres statistiques, la valeur de la qualité minimale exigée a la réception, et la valeur absolue du remplissage de la mémoire de sortie (7) durant quelques cycles de fonctionnement précédents.

4. Dispositif selon la revendication 2, caractérisé
en ce que le module de transmission des paramètres (5) est également connecté au compresseur vidéo (6), et lui envoie les nouveaux paramètres statistiques selon le protocole de communication approprié.
